# EUROPEAN PATENT SPECIFICATION

(11) **EP 3 357 076 B1**
(45) Date of publication and mention of the grant of the patent: **03.08.2022**
(21) Application number: 16781901.0
(22) Date of filing: 20.09.2016
(51) Int. Cl.: H01F 27/06, H01F 27/30, H01F 27/32, H01F 37/00

(54) **COMPOSITE CRADLE FOR USE WITH COIL OF AIR CORE REACTORS**
ZUSAMMENGESETZTES GESTELL ZUR VERWENDUNG MIT EINER SPULE VON LUFTKERNREAKTOREN
BERCEAU COMPOSITE DESTINÉ À ÊTRE UTILISÉ AVEC UNE BOBINE DE RÉACTEURS À NOYAU D'AIR

(30) Priority: 28.09.2015 US 201514867611
(43) Date of publication of application: 08.08.2018
(73) Proprietor: Siemens Energy Global GmbH & Co. KG, 81739 München (DE)
(72) Inventor: KHAN, Kamran, Toronto, Ontario M1P 3T5 (CA)
(74) Representative: Isarpatent
(86) International application number: PCT/US2016/052594
(87) International publication number: WO 2017/058565

(56) References cited:
- US-A- 1 017 348
- US-A- 1 747 507
- US-A- 3 696 315
- US-A- 5 202 584

## Description

### BACKGROUND

Aspects of the present invention generally relate to dry type air core reactors of the type used in utility and power applications and more specifically relates to cradles for alternating current (AC) air core reactors, but may also be applied to direct current (DC) air core reactors.

In an electrical substation of a utility all the air core reactors are at a line potential (line voltage and line current) and it needs to be isolated from the ground and other phases with insulators. Current insulators are of two main types - porcelain and composites. For many types of equipment the limitation of strength is largely dictated by the bending of the insulator. Bending strength is typically characterized by a quantity termed the "cantilever strength." While the porcelain insulators are somewhat weak in cantilever strength the composites are relatively very strong in cantilever strength. One of the equipment that may be installed in a typical electrical substation of a utility is an air core reactor.

An air core reactor is an electrical component having one or more inductor elements connected between a power source and an electrical load. The reactor opposes rapid changes in current. Thus it attenuates spikes of current and limits peak currents among other specialized applications. Reactors can generate forces internally resulting in loads that must be accommodated by their support structure. Reactors are also subject to external loading from wind, seismic, fault current and industrial vibration. They also need separation from ground by electrical insulators, which may result in long support legs. The core of the structural problem of a reactor is the interface between the winds (which typically generate large loads) and the insulated legs which support the coil. The cradle assists in transmitting the loads in a manner suitable for the reactor.

A direct current (DC) air core reactor often includes a coil mounted on a cradle which is in turn mounted on insulators. The cradle is formed from a ferrous material. This coil may be one of the heaviest equipment mounted on insulators in an electrical substation. This coil is at a line potential and needs strong insulator structure to support it as the coil may be a massive object. For example, a coil may weigh up to 120,000 lbs. One approach of solving the structural problem of mounting relatively heavy objects on relatively weak insulators was solved by incorporating a joint to allow the coil to move. There is a need to extend this technology to an alternating current (AC) air core reactor. The issue with AC air core reactors is that they create a very strong magnetic field. This magnetic field causes the ferrous material of the cradle to heat up. The energy used in heating the cradle is wasted and heating can be such that it is unacceptable.

In US 1 017 348 A a coil with a casing of insulating refractory material is disclosed. The reactance coil is formed of a plurality of units, each unit being a flat spiral of wire having its turns disposed in a plane passing through the longitudinal axis of the wire. The casing is cylindrical in form, and is made of insulating refractory material, such as porcelain. The bottom plate is formed with air opening, preferably produced by molding said plate with a central tubular portion, and partitions radiating therefrom to the rim. The central tubular standard is seated upon, the portion of the bottom plate, or may be formed integral therewith. In the outer periphery of said standard are equidistantly spaced radiating grooves. The body portion of the casing is built of similar arms. Each arm is suitably formed at its inner end to fit in the grooves and its outer end is provided with a shoulder. In the upper side of each arm are formed recesses. The wall is built up of similar arc-shaped sections in which are notches to receive the shouldered outer ends of arms. Further, in US 1 747 507 A a reactor is described which has a supporting structure embodying insulating legs and end plates. The winding comprises a plurality of spiral conductor layers disposed in superposed relation, the adjacent layers being supported by apertured horizontal spacing members arranged in stacks, all of which are disposed radially form the centerline of the structure. The horizontal spacing members are formed of suitable insulating material. The spacing members are placed in superposed relation to a layer of winding interposed therebetween, with the apertures in alignment. Extending between the adjacent convolutions of each layer of conducting winding and extending through the aligned apertures in the aforementioned horizontal spacing members are vertical spacing members. The vertical spacing members extend below the bottom layer of the winding and above the top layer of the winding. Spacing members are located in certain of the spaces above and below the conductor layers, between the vertical spacing members. A bolt extends through the spacing members at both end of the supporting structure, and each bolt has a nut associated therewith. In US 3 696 315 A line trap is provided in an arrangement facilitating current balance between a plurality of layers as well as providing mechanical stability. The line trap includes a coil of an electrical conductor with an end frame at each end that comprises a plurality of bars extending radially outward from a central hub. The radial bars are mechanically attached to the coil structure and also provide a path for electrical conduction from the layers of the coil to centrally located connector taps. Moreover, in US 5 202 584 A an air core inductor is disclosed having mounted thereon a band of material of selected characteristics providing only an electromagnetically coupled resistance that reflects back into the windings of the inductor for filtering applications.

Therefore, there is a need for improvements in cradle technology for applications such as in an air core reactor.

### SUMMARY

According to the invention, a cradle is provided according to claim 1 to mount to a coil of an air core reactor. Briefly described, aspects of the present invention relate to a cradle configured in a star or a wheel or a combination of these forms and at least partially formed from a dielectric material. The use of dielectric materials can result in novel geometries of cradles. In particular, at least one outer member of a plurality of outer members which form a continuous path must be formed from a dielectric material whilst maintaining the structural loads of the coil and a plurality of radiating arms being formed from a material that enables the cradle to maintain the structural loads of the coil. One of ordinary skill in the art appreciates that such a cradle can be configured to be installed in different environments where coil support structure is needed, for example, in alternating current (AC) air core reactors to eliminate eddy current paths and/or mitigate electromagnetic heating while structurally reinforcing the reactor.

In accordance with one illustrative embodiment of the present invention, a cradle to mount a coil of air core reactor is provided. The air core reactor comprises a plurality of insulating legs to mount the cradle. The cradle comprises of a plurality of arms emanating from a central hub. Each arm having a free end and an end coupled to the hub. The free end of each arm is configured to be coupled to a bearing assembly. The cradle further comprises a plurality of outer members. The free ends of each arms emanating from the hub are coupled to a corresponding outer member of the plurality of outer members. All the outer members of the plurality of outer members are formed from a dielectric material. The plurality of arms emanating from the hub being formed from a material that satisfies the structural and thermal conditions of the reactor. Typically this would be either a non-ferrous or a dielectric material.

In accordance with another illustrative embodiment of the present invention, an air core reactor is provided. The reactor comprises a coil, a cradle to mount the coil and a plurality of insulating legs to mount the cradle. The cradle comprises of a plurality of arms emanating from a central hub. The cradle comprises a plurality of outer members which span between insulating leg mounting points. All the outer members of the plurality of outer members are formed from a dielectric material when the connection of the coil is with conductive fasteners. At least one outer member of the plurality of outer members is formed from a dielectric material when the connection of the coil is with non-conductive fasteners. All the arms of the plurality of arms of the cradle may be constructed of a material that satisfies the structural and thermal conditions of the reactor.

In accordance with yet another illustrative embodiment of the present invention, a cradle to mount a coil of an electric power line reactor is provided. The cradle comprises a plurality of arms extending radially from a central hub. Each arm has a free end. The cradle further comprises a plurality of outer members. A corresponding outer member of the plurality of outer members is coupled to a corresponding pair of adjacent arms of the plurality of arms. The plurality of outer members is formed from a non-conductive material and the plurality of arms being formed from a material having sufficient mechanical and structural strength such that the cradle supports weight of the coil.

### BRIEF DESCRIPTION OF THE DRAWINGS

FIG. 1A illustrates a schematic diagram of a prior art cradle to hold a coil in place for an air core reactor.
FIG. 1B illustrates a schematic diagram of an alternate configuration of a prior art cradle to hold a coil in place for an air core reactor.
FIG. 2 illustrates a schematic diagram of a cradle to hold a coil in place for an AC air core reactor in accordance with an exemplary embodiment of the present invention.
FIG. 3 illustrates a schematic diagram of an alternate configuration of a cradle holding a coil in place over insulator legs of an AC air core reactor in accordance with an exemplary embodiment of the present invention.
FIG. 4 illustrates a schematic diagram of an AC air core reactor in that a coil is mounted on a cradle which is placed on insulator legs, wherein Fig. 4 illustrates features of the invention, but do not show an embodiment of the invention as claimed.
FIG. 5 illustrates a schematic diagram of an alternate configuration of a cradle in accordance with an exemplary embodiment, wherein Fig. 5 illustrates features of the invention, but do not show an embodiment of the invention as claimed.
FIG. 6 illustrates a schematic diagram of a yet another alternate configuration of a cradle, wherein Fig. 6 illustrates features of the invention, but do not show an embodiment of the invention as claimed.
FIG. 7 illustrates a schematic diagram of a yet another alternate configuration of a cradle wherein Fig. 7 illustrates features of the invention, but do not show an embodiment of the invention as claimed.

### DETAILED DESCRIPTION

To facilitate an understanding of embodiments, principles, and features of the present invention, they are explained hereinafter with reference to implementation in illustrative embodiments. In particular, they are described in the context of being a cradle of an AC air core reactor partially formed from high resistivity materials such as a dielectric material (e.g., porcelain, fiberglass composite) and partially formed from high resistivity and low conductivity materials such as non-ferrous materials (e.g., austenitic stainless steel). Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

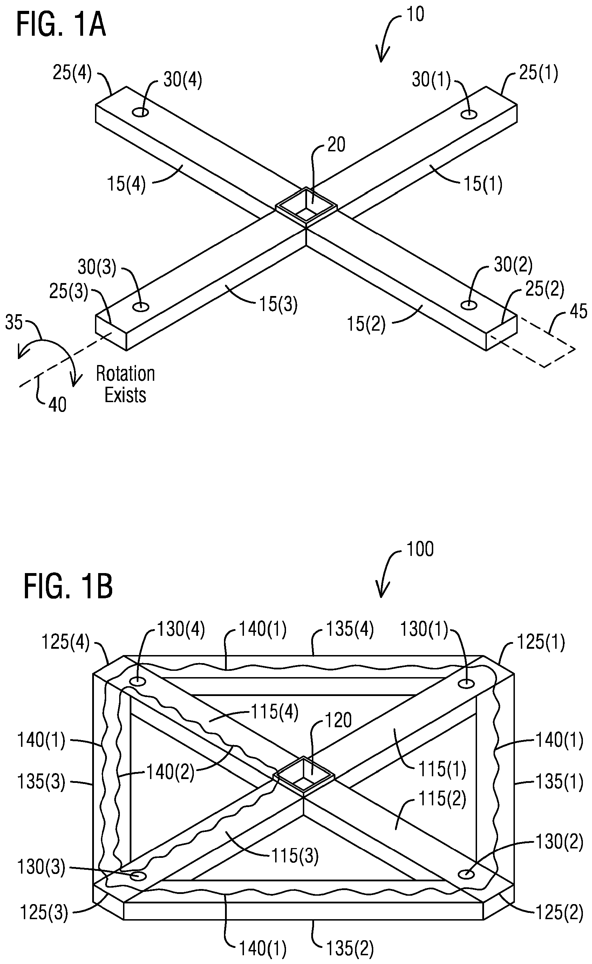

FIG. 1A illustrates a schematic diagram of a prior art cradle 10 to hold a coil (not shown) in place for a DC air core reactor. The cradle 10 comprises a plurality of arms 15(1-4) extending radially from a central hub 20. Each arm of the plurality of arms 15(1-4) having a corresponding free end 25(1-4). Each free end 25 of each arm 15 having a respective interface 30(1-4) that is configured to be coupled to a bearing assembly. In practice, the cradle 10 can demonstrate a rotation 35 with respect to an axis 40 parallel to a horizontal plane 45 of the cradle 10. This rotation is undesirable and can lead to structural and stability issues. The cradle 10 is formed from a ferrous material.

FIG. 1B illustrates a schematic diagram of an alternate configuration of a prior art cradle 100 to hold a coil (not shown) in place for a DC air core reactor. The cradle 100 is formed from a ferrous material. The cradle 100 comprises a plurality of arms 115(1-4) extending radially from a central hub 120. Each arm of the plurality of arms 115(1-4) having a corresponding free end 125(1-4). Each free end 125 of each arm 115 having a respective interface 130(1-4) that is configured to be coupled to a bearing assembly. The cradle 100 comprises a plurality of outer members 135(1-4). The free ends 125 of each pair of adjacent arms of the plurality of arms 115(1-4) are coupled to a corresponding outer member 135 of the plurality of outer members 135(1-4). A first eddy current path 140(1) and a series of second eddy current path (140(2) is illustrative) are formed in the cradle 100 when it is made of a ferrous material and used with an air core reactor due to a large magnetic field created by it. The first and second eddy current paths 140(1-2) heat the cradle 100 and thus waste energy and may have other detrimental effects (e.g. strength reduction of materials, degradation of protective coatings, etc.). Thus, the form and material of the cradle 100 cause undesirable inefficiencies for an operator or a utility when it is used in an AC air core reactor.

The material properties required were identified as follows. Although there is a myriad of factors that influence materials used in the vicinity of the fields generated by coils, two properties dominate: permeability and resistivity. Two effects that are to be avoided (they are actually the same phenomena but it helps to visualize them as separate aspects). 1. Undue eddy heating: this is caused by circulating current paths as a result of low resistivity. 2. Undue induction heating caused by the direct exposure of the field and is influenced by the combination of permeability and resistivity. Additionally, when the heating of the parts is determined, they must also have the strength capability to transmit the loads (perhaps at elevated temperatures), be suitable for long term exterior use, come in a form that is useful to incorporate into the product and be economically viable.

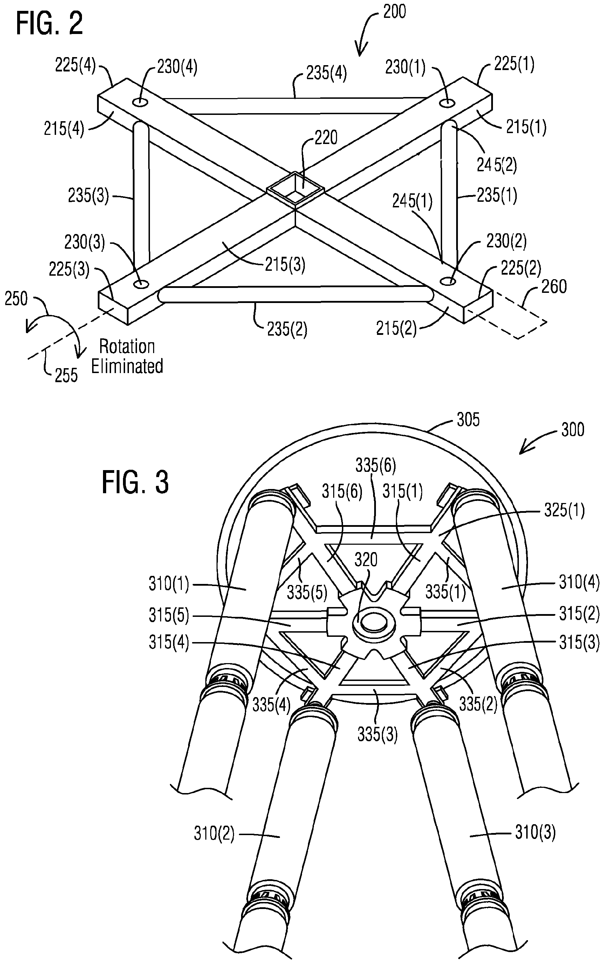

Embodiments of the present invention include as shown in FIG. 2 a changed form and a changed structural material of the cradle 10 of FIG. 1A to substantially eliminate the rotation 35 with respect to the axis 40 parallel to the horizontal plane 45 of the cradle 10. Embodiments of the present invention further include as shown in FIG. 3 a combination of structural materials for the cradle 100 of FIG. 1B to substantially eliminate the first and second eddy current paths 140(1-2) in the cradle 100.

Accordingly, a cradle with essentially no rotation problem and having essentially no circulating eddy current paths is provided using a dielectric material being a material that enables the cradle to support weight of the coil and having a high resistivity and sufficient mechanical and structural strength such that the cradle supports weight of the coil. In one embodiment, besides the dielectric material, a non-ferrous material is also used to form the cradle. In this way, in one embodiment, a structural form and a combination of at least two different materials provide a cradle for an AC air core reactor. The devices, systems and techniques disclosed here can be used to reduce undesired effects by magnetic field induced eddy currents. An insulator material, e.g., a laminated dielectric material, with a relatively high dielectric constant may be used for this purpose.

Referring to FIG. 2, it illustrates a schematic diagram of a cradle 200 to hold a coil (not shown) in place for an AC air core reactor in accordance with an exemplary embodiment of the present invention. The cradle 200 comprises a plurality of arms 215(1-4) extending radially from a central hub 220. Each arm of the plurality of arms 215(1-4) having a corresponding free end 225(1-4). Each free end 225 of each arm 215 having a respective interface 230(1-4) that is configured to be coupled to a coil. The cradle 200 comprises a plurality of outer members 235(1-4). The free ends 225 of each pair of adjacent arms of the plurality of arms 215(1-4) are coupled to a corresponding outer member 235 of the plurality of outer members 235(1-4). The central hub 220 can be conductive or non-conductive. One or more or all arms of the plurality of arms 235(1-4) can be conductive or non-conductive. Cradle coil interface 230(1-4) can be conductive or non-conductive.

Consistent with one embodiment, a corresponding outer member 235(1) of the plurality of outer members 235(1-4) may be coupled to a respective free ends 225(1-4) of a corresponding pair of adjacent arms of the plurality of arms 215(1-4) at a point 245(1-2) being offset from the free ends 225(1-4) of the pair of adjacent arms of the plurality of arms 215(1-4). This offset coupling of the plurality of outer members 235(1-4) to the plurality of arms 215(1-4) substantially eliminates a rotation 250 of the cradle 200 with respect to an axis 255 parallel to a horizontal plane 260 of the cradle 200.

In one embodiment, to avoid eddy heating the plurality of outer members 235(1-4) are made of a dielectric material. For example, the dielectric material may be a discrete, non-conductive material. That is, a non-conductive material is selected to avoid the eddy current paths 40(1-2) in FIG. 1B. The dielectric material may be formed from a fibrous glass material, such as 0.25 inch thick structural section. This eliminates eddy current generation. Just one outer member 235(1) may be formed from the dielectric material to block the current flow in the eddy current paths 40(1-2). However, all the outer members 235(1-4) must be made of dielectric material if the reactor is bolted to the cradle 200 and it is done with a conductive joint (typical).

The outer member 235(1) made of a material such as fiberglass composite or porcelain would suffice. This arrangement prevents eddy currents from travelling from one arm to another. Of course, still better performance can be achieved if the plurality of arms 215(1-4) are also made eddy-resistant by using a dielectric material for their construction. In this way, all cradle generated heat generation phenomena are interrupted around the cradle 200.

In accordance with an exemplary embodiment of the present invention, the plurality of arms 215(1-4) of the cradle 200 are formed from a material that enables the cradle 200 to support weight of the coil. According to one embodiment, each non-adjacent arm of the plurality of arms 215(1-4) of the cradle 200 is formed from a dielectric material. Examples of the dielectric material include fiberglass composite or porcelain.

In one embodiment, the plurality of arms 215(1-4) of the cradle 200 consists of a ferrous material. In one embodiment, the plurality of arms 215(1-4) and the plurality of outer members 235(1-4) of the cradle 200 consists of a non-ferrous material. The non-ferrous material must be a dielectric material from a group consisting of fiberglass composite and porcelain. The non-ferrous material may be an austenitic stainless steel. In an embodiment, the plurality of arms 215(1-4) of the cradle 200 consists of a non-ferrous material and the plurality of outer members 235(1-4) of the cradle 200 consists of a dielectric material. The non-ferrous material may be an austenitic stainless steel. While austenitic stainless steel is probably the strongest material available to form the structural portion of the cradle 200, there are design instances where high strength is less important than reduction of electrical losses. In such instances substantially non-conducting structural members may be used. For example, the cradle 200 may be made with composite materials such as polymer resins, fiberglass and fillers. A fiber reinforced plastic composite cradle is non-conducting and consequently no source of energy loss due to the interaction of the cradle 200 with a magnetic field of the coil.

FIG. 3 illustrates a schematic diagram of an alternate configuration of a cradle 300 for holding a coil 305 in place over insulator legs 310(1-4) of an AC air core reactor in accordance with an exemplary embodiment of the present invention. The cradle 300 comprises a plurality of arms 315(1-6) extending radially from a central hub 320. Each arm of the plurality of arms 315(1-4) having a corresponding end 325(1-6). Each arm 315 having a respective interface (not shown) that is configured to be coupled to a coil. The cradle 300 comprises a plurality of outer members 335(1-6). Each pair of adjacent arms of the plurality of arms 315(1-6) are coupled to a corresponding outer member 335 of the plurality of outer members 335(1-6).

In accordance with an exemplary embodiment of the present invention, the plurality of arms 315(1-6) of the cradle 300 are formed from a material that enables the cradle 300 to support weight of the coil. In one embodiment, the plurality of arms 315(1-6) of the cradle 300 consists of a non-ferrous material. The non-ferrous material may be an austenitic stainless steel. According to one embodiment, the plurality of outer members 335(1-6) of the cradle 300 are formed from a dielectric material. Examples of the dielectric material include fiberglass composite or porcelain.

In one embodiment, the plurality of arms 315(1-6) and the plurality of outer members 335(1-6) of the cradle 300 consists of a non-ferrous material. The non-ferrous material must be a dielectric material. In one embodiment, the plurality of arms 315(1-6) consists of a ferrous material and the plurality of outer members 335(1-6) of the cradle 300 consists of a dielectric material. The plurality of outer members 335(1-6) may be formed from a non-conductive material and the plurality of arms 315(1-6) may be formed from a material having a high resistivity and sufficient mechanical strength such that the cradle 300 supports weight of the coil 305.

In accordance with another illustrative embodiment of the present invention, an air core reactor is provided. The reactor comprises a coil, a cradle to mount the coil and a plurality of insulating legs to mount the cradle. The cradle comprises of a plurality of arms emanating from a central hub. The cradle comprises a plurality of outer members which span between insulating leg mounting points. All the outer members of the plurality of outer members are formed from a dielectric material when the connection of the coil is with conductive fasteners. At least one outer member of the plurality of outer members is formed from a dielectric material when the connection of the coil is with non-conductive fasteners. All the arms of the plurality of arms of the cradle may be constructed of a material that satisfies the structural and thermal conditions of the reactor.

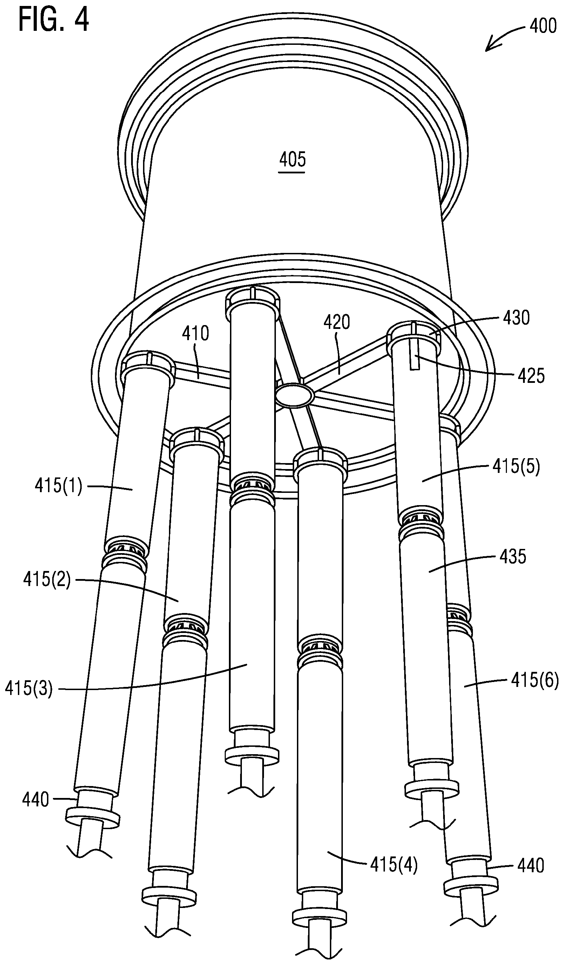

FIG. 4 illustrates a schematic diagram of an AC air core reactor 400 , wherein Fig. 4 illustrate features of the invention, but do not show an embodiment of the invention as claimed. The AC air core reactor 400 comprises a coil 405, a cradle 410 and a plurality of insulator legs 415(1-6). The coil 405 is mounted on the cradle 410 which is coupled to the insulator legs 415(1-6). Although the cradle 410 is shown included in the AC air core reactor 400, the cradles 200 or 300 may very well be used instead in its place in the AC air core reactor 400. A cradle arm 420 may be coupled to a bearing shaft 425. The bearing shaft 425 is coupled to an insulator mounting plate 430. A phase to ground insulator 435 is connected to the insulator mounting plate 430. The phase to ground insulator 435 includes a base pedestal 440 at the bottom end which is couple to the base structure of the AC air core reactor 400.

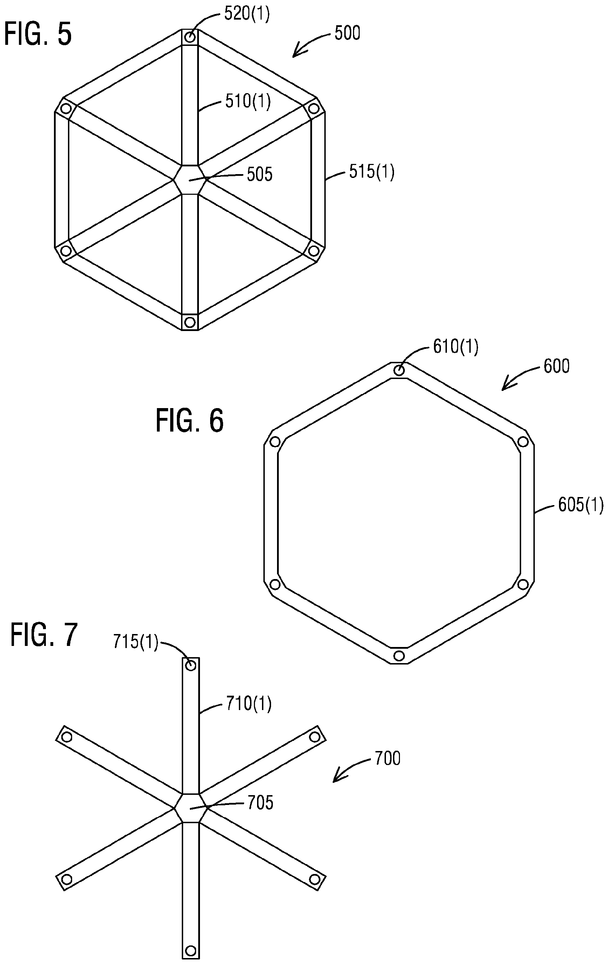

FIG. 5 illustrates a schematic diagram of an alternate configuration of a cradle 500, wherein Fig. 5 illustrates features of the invention, but do not show an embodiment of the invention as claimed. The cradle 500 comprises a hub 505, a plurality of radiating arms 510(1-6), a plurality of outer members or struts 515(1-6) and a plurality of coil interfaces 520(1-6). The hub 505 can be conductive or non-conductive, the plurality of radiating arms 510(1-6) can be conductive or non-conductive, the plurality of outer members or struts 515(1-6) can be non-conductive and the plurality of coil interfaces 520(1-6) can be conductive or non-conductive.

FIG. 6 illustrates a schematic diagram of a yet another alternate configuration of a cradle 600, wherein Fig. 6 illustrates features of the invention, but do not show an embodiment of the invention as claimed. The cradle 500 comprises a plurality of outer members or struts 605(1-6) and a plurality of coil interfaces 610(1-6). The plurality of outer members or struts 605(1-6) can be conductive or non-conductive provided that a minimum of one cradle strut 605 is non-conductive and the plurality of coil interfaces 610(1-6) can be non-conductive.

FIG. 7 illustrates a schematic diagram of a yet another alternate configuration of a cradle 700, wherein Fig. 7 illustrates features of the invention, but do not show an embodiment of the invention as claimed. The cradle 700 comprises a hub 705, a plurality of radiating arms 710(1-6) and a plurality of coil interfaces 715(1-6). The hub 705 can be conductive or non-conductive, the plurality of radiating arms 710(1-6) can be conductive or non-conductive and the plurality of coil interfaces 715(1-6) can be conductive or non-conductive.

While embodiments of the present invention have been disclosed in exemplary forms, it will be apparent to those skilled in the art that many modifications, additions, and deletions can be made therein without departing from the scope of the invention as set forth in the following claims.

Embodiments and the various features and advantageous details thereof are explained more fully with reference to the non-limiting embodiments that are illustrated in the accompanying drawings and detailed in the above description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention.

It will also be appreciated that one or more of the elements depicted in the drawings/figures can also be implemented in a more separated or integrated manner, or even removed or rendered as inoperable in certain cases, as is useful in accordance with a particular application.

## Claims

1. A cradle (200) to mount a coil (405) of an air core reactor (400), the cradle (200) comprising:
a plurality of arms (215(1-4)) extending radially from a central hub (220), each arm (215(1-4)) having a free end (225(1-4); and
a plurality of outer members (235(1-4)), wherein a corresponding outer member (235) of the plurality of outer members (235(1-4)) is coupled to a corresponding pair of adjacent arms (215(1-2)) of the plurality of arms (215(1-4)), and
wherein the plurality of outer members (235(1-4)) formed from a non-conductive material and the plurality of arms (215(1-4)) being formed from a material having sufficient mechanical and structural strength such that the cradle (200) supports weight of the coil (405),
wherein the corresponding outer member (235) of the plurality of outer members (235(1-4)) is coupled to respective free ends (225(1-4)) of a corresponding pair of adjacent arms (215(1-2)) of the plurality of arms (215(1-4)) at a point (245(1-2)) being offset from the free ends (225(1-4)) of each pair of adjacent arms (215(1-2)) of the plurality of arms (215(1-4)).

2. The cradle (200) of claim 1,
wherein the plurality of arms (215(1-4)) formed from a non-ferrous material and the plurality of outer members (235(1-4)) formed from a dielectric material.

3. The cradle (200) of claim 2, wherein the non-ferrous material is an austenitic stainless steel, and
wherein the dielectric material is from a group consisting of fiber glass composite and porcelain.

4. The cradle (200) of claim 1, wherein the coil (405) has structural loads and the free end (225) of each arm (215) of the plurality of radiating arms (215(1-4)) has an interface (230(1-4)) that is configured to be coupled to the coil (405).

5. The cradle (200) of claim 4, wherein each arm (215) of the plurality of radiating arms (215(1-4)) formed from a dielectric material.

6. The cradle (200) of claim 5, wherein the dielectric material is from a group consisting of fiber glass composite and porcelain.

7. The cradle (200) of claim 4, wherein the plurality of radiating arms (215(1-4)) and the plurality of outer members (235(1-4)) except the at least one outer member (235) of the plurality of outer members (235(1-4)) formed from a ferrous material.

8. The cradle (200) of claim 4, wherein the plurality of radiating arms (215(1-4)) and the plurality of outer members (235(1-4)) including the at least one outer member (235) of the plurality of outer members (235(1-4)) formed from a non-ferrous material.

9. The cradle (200) of claim 8, wherein the non-ferrous material is from a group consisting of fiber glass composite and porcelain.

10. The cradle (200) of claim 4,
wherein the plurality of radiating arms (215(1-4)) formed from a non-ferrous material and the plurality of outer members (235(1-4)) formed from a dielectric material.

11. An air core reactor comprising:
a coil (305);
a cradle (300, 200) according to any of claims 1 to 10 to mount the coil (305), the coil (305) having structural loads; and a plurality of legs (310(1-4)) to mount the cradle (300, 200).

## Patentansprüche

1. Gestell (200) zum Montieren einer Spule (405) eines Luftkernreaktors (400), wobei das Gestell (200) umfasst:
eine Vielzahl von Armen (215(1-4)), die sich radial von einer zentrale Nabe (220) erstrecken, wobei jeder Arm (215(1-4)) ein freies Ende (225(1-4) hat; und
eine Vielzahl von Außenelementen (235(1-4)), wobei ein entsprechendes Außenelement (235) der Vielzahl von Außenelementen (235(1-4)) an ein entsprechendes Paar benachbarter Arme (215(1-2)) von der Vielzahl der Arme (215(1-4)) gekoppelt ist, und
wobei die Vielzahl der Außenelemente (235(1-4)) aus einem nicht-leitfähigen Material gebildet ist und die Vielzahl der Arme (215(1-4)) aus einem Material mit ausreichend mechanischer und struktureller Festigkeit gebildet ist, so dass das Gestell (200) Gewicht der Spule (405) trägt,
wobei das entsprechende Außenelement (235) der Vielzahl von Außenelementen (235(1-4)) an jeweilige freie Enden (225(1-4)) eines entsprechenden Paares benachbarter Arme (215(1-2)) von der Vielzahl der Arme (215(1-4)) an einem Punkt (245(1-2)) gekoppelt ist, der von den freien Enden (225(1-4)) jedes Paares benachbarter Arme (215(1-2)) von der Vielzahl der Arme (215(1-4)) versetzt ist.

2. Gestell (200) nach Anspruch 1, wobei die Vielzahl der Arme (215(1-4)) aus einem Nichtferromaterial gebildet ist und die Vielzahl der Außenelemente (235(1-4)) aus einem dielektrischen Material gebildet ist.

3. Gestell (200) nach Anspruch 2, wobei das Nichtferromaterial ein austenitischer Edelstahl ist, und
wobei das dielektrische Material aus einer Gruppe bestehend aus Fiberglasverbund und Porzellan ist.

4. Gestell (200) nach Anspruch 1, wobei die Spule (405) strukturelle Lasten hat und das freie Ende (225) jedes Arms (215) von der Vielzahl der Strahlerarme (215(1-4)) eine Schnittstelle (230(1-4)) aufweist, die ausgestaltet ist, um an die Spule (405) gekoppelt zu werden.

5. Gestell (200) nach Anspruch 4, wobei jeder Arm (215) von der Vielzahl der Strahlerarme (215(1-4)) aus einem dielektrischen Material gebildet ist.

6. Gestell (200) nach Anspruch 5, wobei das dielektrische Material aus einer Gruppe bestehend aus Fiberglasverbund und Porzellan ist.

7. Gestell (200) nach Anspruch 4, wobei die Vielzahl der Strahlerarme (215(1-4)) und die Vielzahl der Außenelemente (235(1-4)) außer dem mindestens einen Außenelement (235) von der Vielzahl der Außenelemente (235(1-4)) aus einem Ferromaterial gebildet sind.

8. Gestell (200) nach Anspruch 4, wobei die Vielzahl der Strahlerarme (215(1-4)) und die Vielzahl der Außenelemente (235(1-4)) einschließlich des mindestens einen Außenelements (235) von der Vielzahl der Außenelemente (235(1-4)) aus einem Ferromaterial gebildet sind.

9. Gestell (200) nach Anspruch 8, wobei das Nichtferromaterial aus einer Gruppe bestehend aus Fiberglasverbund und Porzellan ist.

10. Gestell (200) nach Anspruch 4, wobei die Vielzahl der Strahlerarme (215(1-4)) aus einem Nichtferromaterial gebildet ist und die Vielzahl der Außenelemente (235(1-4)) aus einem dielektrischen Material gebildet ist.

11. Luftkernreaktor, umfassend:
eine Spule (305);
ein Gestell (300, 200) nach einem der Ansprüche 1 bis 10 zum Montieren der Spule (305),
wobei die Spule (305) strukturelle Lasten hat; und
eine Vielzahl von Schenkeln (310(1-4)) zum Montieren des Gestells (300, 200).

## Revendications

1. Berceau (200) pour monter une bobine (405) d'un réacteur à noyau d'air (400), le berceau (200) comprenant:
une pluralité de bras (215 (1-4)) s'étendant radialement à partir d'un moyeu central (220), chaque bras (215 (1-4)) ayant une extrémité libre (225 (1-4); et
une pluralité d'éléments externes (235 (1-4)), un élément externe correspondant (235) de la pluralité d'éléments externes (235 (1-4)) étant couplé à une paire correspondante de bras adjacents (215 (1-2)) de la pluralité de bras (215 (1-4)), et
la pluralité d'éléments externes (235 (1-4)) étant formés à partir d'un matériau non conducteur et la pluralité de bras (215 (1-4)) étant formés à partir d'un matériau ayant une résistance mécanique et structurelle suffisante de telle sorte que le berceau (200) supporte le poids de la bobine (405),
l'élément externe correspondant (235) de la pluralité d'éléments externes (235 (1-4)) étant couplé à des extrémités libres respectives (225 (1-4)) d'une paire correspondante de bras adjacents (215 (1-2)) de la pluralité de bras (215 (1-4)) au niveau d'un point (245 (1-2)) qui est décalé par rapport aux extrémités libres (225 (1-4)) de chaque paire de bras adjacents (215 (1-2)) de la pluralité de bras (215 (1 -4)).

2. Berceau (200) selon la revendication 1, dans lequel la pluralité de bras (215 (1-4)) sont formés à partir d'un matériau non ferreux et la pluralité d'éléments externes (235 (1-4)) sont formés à partir d'un matériau diélectrique.

3. Berceau (200) selon la revendication 2, dans lequel le matériau non ferreux est un acier inoxydable austénitique, et dans lequel le matériau diélectrique vient d'un groupe constitué de composite de fibre de verre et de porcelaine.

4. Berceau (200) selon la revendication 1, dans lequel la bobine (405) a des charges structurelles et l'extrémité libre (225) de chaque bras (215) de la pluralité de bras rayonnants (215 (1-4)) a une interface (230 (1-4)) qui est configurée pour être couplée à la bobine (405).

5. Berceau (200) selon la revendication 4, dans lequel chaque bras (215) de la pluralité de bras rayonnants (215 (1-4)) est formé à partir d'un matériau diélectrique.

6. Berceau (200) selon la revendication 5, dans lequel le matériau diélectrique vient d'un groupe constitué de composite de fibre de verre et de porcelaine.

7. Berceau (200) selon la revendication 4, dans lequel la pluralité de bras rayonnants (215 (1-4)) et la pluralité d'éléments externes (235 (1-4)) à l'exception de l'au moins un élément externe (235) de la pluralité d'éléments externes (235 (1-4)) sont formés à partir d'un matériau ferreux.

8. Berceau (200) selon la revendication 4, dans lequel la pluralité de bras rayonnants (215 (1-4)) et la pluralité d'éléments externes (235 (1-4)) y compris l'au moins un élément externe (235) de la pluralité d'éléments externes (235 (1-4)) sont formés à partir d'un matériau non ferreux.

9. Berceau (200) selon la revendication 8, dans lequel le matériau non ferreux vient d'un groupe constitué de composite de fibre de verre et de porcelaine.

10. Berceau (200) selon la revendication 4, dans lequel la pluralité de bras rayonnants (215 (1-4)) sont formés à partir d'un matériau non ferreux et la pluralité d'éléments externes (235 (1-4)) sont formés à partir d'un matériau diélectrique.

11. Réacteur à noyau d'air comprenant:
une bobine (305);
un berceau (300, 200) selon l'une quelconque des revendications 1 à 10 pour monter la bobine (305), la bobine (305) ayant des charges structurelles; et
une pluralité de pattes (310 (1-4)) pour monter le berceau (300, 200).
